# EUROPÄISCHE PATENTSCHRIFT

(11) **EP 2 331 846 B1**
(45) Veröffentlichungstag und Bekanntmachung des Hinweises auf die Patenterteilung: **14.08.2013**
(21) Anmeldenummer: 09749035.3
(22) Anmeldetag: 01.10.2009
(51) Int. Cl.: F16H 57/027

(54) **ENTLÜFTUNGSVORRICHTUNG FÜR GETRIEBE MIT WASSER ENTHALTENDEM SCHMIERSTOFF**
VENTILATION DEVICE FOR TRANSMISSIONS WITH LUBRICANT COMPRISING WATER
DISPOSITIF D'AÉRATION POUR UNE TRANSMISSION À LUBRIFIANT À BASE D'EAU

(30) Priorität: 01.10.2008 DE 102008050149; 01.10.2008 DE 102008050147
(43) Veröffentlichungstag der Anmeldung: 15.06.2011
(73) Patentinhaber: MAGNA STEYR Fahrzeugtechnik AG & Co KG, 8041 Graz (AT)
(72) Erfinder: MAYR, Franz, A-8041 Graz (AT)
(74) Vertreter: Rausch, Gabriele
(86) Internationale Anmeldenummer: PCT/EP2009/062783
(87) Internationale Veröffentlichungsnummer: WO 2010/037829

(56) Entgegenhaltungen:
- EP-A2- 0 939 250
- EP-A2- 1 964 911
- DE-A1- 2 220 565
- DE-T2- 69 407 096
- GB-A- 736 108

## Beschreibung

Die Erfindung betrifft eine Entlüftungsvorrichtung nach dem Oberbegriff des Patentanspruchs 1.

In mit Öl geschmierten Getrieben ist eine Entlüftungsöffnung vorhanden, welche bei betriebsbedingtem Anstieg und Abnahme der Temperatur im Getriebe einen Druckausgleich mit der Umgebung erlaubt und in der Regel als Vorrichtung mit Einbauten zum Zurückhalten von Ölnebel und zum Fernhalten von Schmutz aus der Umgebung ausgerüstet ist.

Aus der gattungsbildenden EP 0 939 250 A2 ist eine direkt in das Getriebegehäuse eingeschraubte Entlüftungsvorrichtung bekannt, die einen mit dem Inneren des Getriebegehäuses in Verbindung stehenden Zentralkanal aufweist, der über Querkanäle in einen schalenförmigen Umfangsbehälter mündet, dessen Ringraum mit Filtermaterial gefüllt ist. Angrenzend an den oberen Umfangsrand sind in der Außenwandung des Behälters Entlüftungsöffnungen ausgebildet, die zur Außenumgebung führen. Das Getriebe ist mit normalem Getriebeöl befüllt. Durch das Filtermaterial soll ein Austreten von Öldampf verhindert werden.

Die DE 22 20 565 A offenbart ein rezirkulierendes Kühlsystem für mit Öl geschmierte Untersetzungsgetriebe. Ein Gebläse rezirkuliert Öldämpfe enthaltende Luft aus dem Inneren des Getriebes durch einen Wärmetauscher wieder zurück ins Getriebe. Das kondensierte Öl wird getrennt rückgeführt. Ein Druckausgleich mit der Umgebung findet nicht statt.

Aus der WO 2007/098523 A1 ist ein Wasser enthaltender Schmierstoff bekannt, der nebst einem hohen Anteil an Wasser ein den Gefrierpunkt senkendes Mittel, zum Beispiel Glykol, und weitere Zusätze beziehungsweise Schwebstoffe enthält.

Im Vergleich mit Schmieröl hat Wasser einen sehr niederen Dampfdruck, so dass es leicht verdampft. Das führt dazu, dass nicht nur die Schmiermittelmenge im Getriebe immer weniger wird, was bald zur Zerstörung des Getriebes führt, sondern sich auch die Zusammensetzung des Schmiermittels ändert, da der Anteil an Wasser immer kleiner wird.

Der Erfindung liegt die Aufgabe zugrunde, eine Entlüftungsvorrichtung zu schaffen, durch die ein Verlust von Wasser bei Getrieben verhindert wird, die mit Wasser enthaltendem Schmiermittel befüllt sind.

Diese Aufgabe wird durch eine Entlüftungsvorrichtung mit den Merkmalen des Patentanspruchs 1 gelöst. Vorteilhafte Ausgestaltungen der erfindungsgemäßen Entlüftungsvorrichtung sind Gegenstand des Patentanspruchs 2.

Bei betriebsbedingter Erwärmung des Getriebes dehnt sich die im schmiermittelfreien Raum befindliche Luft aus und es tritt erhöhte Verdampfung auf, sodass ein Gemisch aus Luft und Wasserdampf durch die Leitung in die Entlüftungsvorrichtung strömt. In dieser wird der Wasserdampf kondensiert und die Luft kann in die Umgebung entweichen. Somit findet gleichzeitig mit dem Druckausgleich eine Trennung von Luft und Wasserdampf und eine Kondensation des Wasserdampfes statt.

Die Leitung führt zumindest im Behälter abwärts und endet unter dem Spiegel des Kondensates. So kann das Kondensat bei Druckabfall im Getriebe wieder zurück gesogen werden.

Für die Kondensation ist eine Wärmeabfuhr erforderlich, die auf verschiedene Weise erreicht wird. Entweder durch eine im Inneren des mindestens einen Behälters angebrachte von einem geeigneten Kühlmittel durchströmte Rohrgruppe oder durch an der Außenseite des Behälters angeordnete Kühlrippen, oder eine Kombination von beiden. Handelt es sich um das Getriebe eines Kraftfahrzeuges, sollten die Kühlrippen möglichst dem Fahrtwind ausgesetzt sein. Dadurch, dass die Vorrichtung nicht am Getriebe selbst angebracht zu sein braucht, sondern durch eine Leitung mit ihm verbunden ist, ist das leicht möglich. Wenn die Leitung stetig ansteigt und ihr Querschnitt ausreichend bemessen ist, kann sie gleichzeitig auch als Rücklauf für kondensiertes Wasser dienen. So ist nur ein einfacher Schlauch zwischen dem Getriebe und der Vorrichtung nötig.

### Figuren

- Fig. 1:: Schematische Darstellung einer Vorrichtung in einer ersten Ausführungsform, die nicht von der Erfindung umfasst wird,
- Fig. 2:: Schematische Darstellung der Vorrichtung in einer zweiten Ausführungsform, die nicht von der Erfindung umfasst wird, in der Ausgangsstellung,
- Fig. 3:: Wie Fig. 2, bei Erwärmung des Getriebes,
- Fig. 4:: Wie Fig. 2, bei Abkühlung des Getriebes.
- Fig. 5:: Schematische Darstellung der erfindungsgemäßen Vorrichtung

### Beschreibung

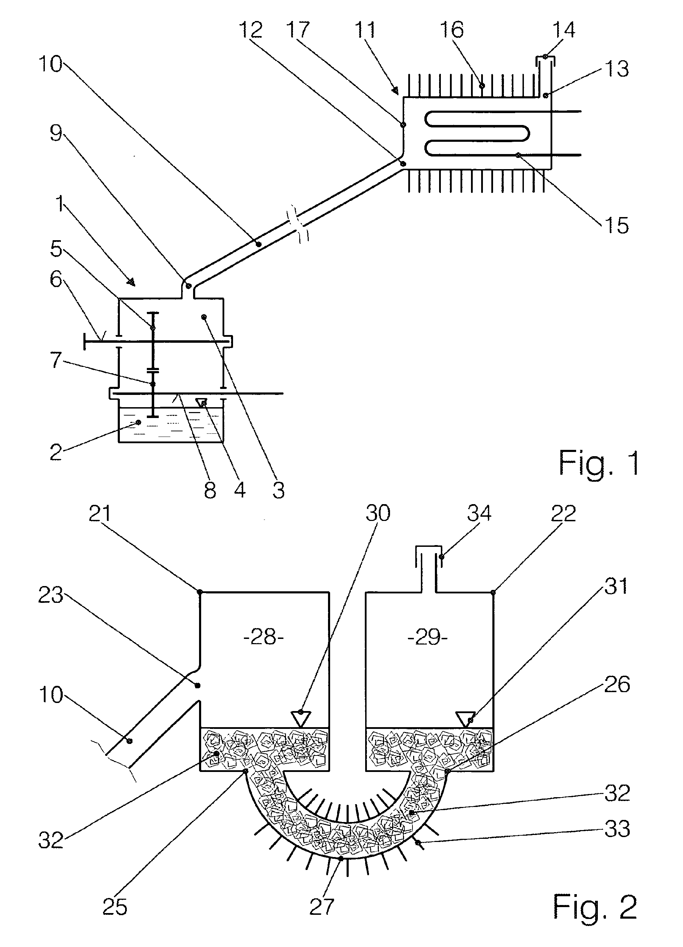

In Fig. 1 ist ein Getriebe summarisch mit 1 und eine Entlüftungsvorrichtung mit 11 bezeichnet. Das Getriebe 1 enthält hier als vereinfachtes Beispiel eine treibende Welle 6 mit einem Zahnrad 5 und eine getriebene Welle 8 mit einem Zahnrad 7. Auf die bei Getrieben üblichen Details wie Lagerung und Gehäuseteilung ist nicht weiter eingegangen. In der Praxis kann es ein beliebiges Getriebe, etwa das Schaltgetriebe oder das Hinterachsgetriebe mit Differential eines Kraftfahrzeuges sein.

Im unteren Teil des Getriebes ist eine Schmierflüssigkeit 2 mit dem Spiegel 4. Das Zahnrad 7 taucht in die Schmierflüssigkeit 2 ein. In der oberen Region hat das Getriebe 1 eine Öffnung 9. Ansonsten ist es geschlossen, hat also keine Strömungsverbindung zur Umgebung. Die Schmierflüssigkeit enthält einen nennenswerten Anteil an Wasser und ist in der WO 2007/098523 A1 genauer beschrieben. Von der Öffnung 9 führt eine Leitung 10 stetig aufwärts zur Entlüftungsvorrichtung 11. Diese besteht hier aus einem Behälter 17, in dessen Innerem sich eine Kühlrohrschlange 15 befindet. Sie ist von einem vorzugsweise flüssigen Kühlmittel durchströmt. Alternativ oder zusätzlich kann der Behälter 17 außen mit Kühlrippen 16 versehen sein. An seiner höchsten Stelle hat der Behälter 17 eine Öffnung 13, die als konventionelle Entlüftungsöffnung mit einem Hut 14 gegen das Eindringen von Schmutz schützt.

Anhand dieser einfachsten Ausführungsform der Fig. 1 ist die Grundlage der Funktion zu erkennen. Das durch Reibung und Erwärmung im Getriebe 1 verdampfende Wasser (und gegebenenfalls weitere im Schmiermittel vorhandene Flüssigkeiten) steigt über die Leitung 10 in die Entlüftungsvorrichtung 11 auf. Dort kondensiert es dank der Kühlung und das Kondensat fließt wieder in das Getriebe 1 zurück. Weil die Entlüftungsvorrichtung 11 eine getrennte Einheit ist, kann sie auch in einiger Entfernung vom Getriebe angeordnet sein, etwa an einer Stelle, an der sie dem Fahrtwind ausgesetzt ist. In diesem Fall kommen die Kühlrippen zu statten, andernfalls erfolgt die Abfuhr der Kondensationswärme vorwiegend durch die Kühlrohrschlange 15. Wegen der Öffnung 13 kommt es dabei zu keiner Veränderung des Druckes im Getriebe oder im Behälter 17.

In der Ausführungsform der Fig. 2 wird die Entlüftungsvorrichtung von zwei Behältern gebildet, einem ersten Behälter 21 und einem zweiten Behälter 22, beide im Wesentlichen in derselben geodätischen Höhe, also nebeneinander. Die vom Getriebe aufsteigende Leitung 10 mündet in einer bestimmten Höhe (Mündung 23) in den ersten Behälter 21. Der zweite Behälter 22 hat an seiner höchsten Stelle eine konventionelle Entlüftungsöffnung, die die Verbindung zur Umgebung herstellt. Die tiefsten Stellen 25,26 der beiden Behälter 21,22 sind über ein U-förmiges Rohr 27 miteinander verbunden, so dass sie für eine Flüssigkeit kommunizierende Gefäße bilden.

Das U-förmige Rohr 27 und die unteren Regionen der beiden Behälter 21,22 sind entsprechend den Flüssigkeitsspiegeln 30,31 mit einer Flüssigkeit gefüllt. Der Raum 28 beziehungsweise 29 darüber enthält Luft und Wasserdampf. In der in Fig. 2 gezeigten Ausgangsstellung (vor Inbetriebnahme des Getriebes) sind beide Spiegel 30,31 gleich hoch. Der Spiegel 30 ist hier etwas unter der Mündung 23 der Leitung 10. Die Flüssigkeit ist eine der Komponenten der Schmierflüssigkeit beziehungsweise die Schmierflüssigkeit selbst oder eine Mischung aus deren Komponenten. Zusätzlich zur Flüssigkeitsfüllung enthalten das U-förmige Rohr 27 und die unteren Regionen der beiden Behälter 21,22 noch eine Füllung 32 aus einem porösen Material, das Wärme gut aufnimmt und leitet. Diese Füllung 32 soll die Strömung der Flüssigkeit zwischen den beiden Behältern 21,22 zwar gestatten, aber dämpfen. Vor allem aber hat sie die Aufgabe, Wärme aufzunehmen und abzuleiten, siehe die Funktionsbeschreibung weiter unten. Rostfreie Stahlwolle hat sich dafür als besonders wirksam erwiesen, nicht zuletzt wegen ihrer guten Wärmeleitfähigkeit. Zusätzlich kann das U-förmige Rohr 27 noch mit Kühlrippen 33 versehen sein.

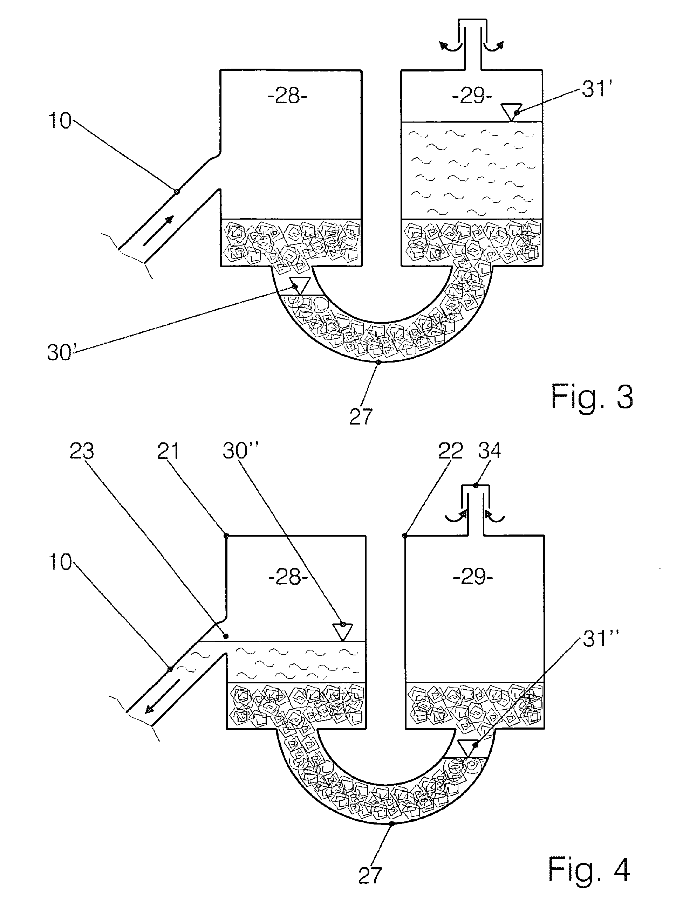

Zur Erklärung der Funktion wird zunächst der Übergang vom Initialzustand der Fig. 2 zum Zustand in Fig. 3 beschrieben: Im Betrieb erwärmt sich das Getriebe und mit ihm die Schmierflüssigkeit, wobei das darin enthaltene Wasser zu verdampfen beginnt und sich das Luft/Dampf - Gemisch im Raum über der Schmierflüssigkeit ausdehnt. Das bewirkt ein Aufsteigen des Gemisches durch den Kanal 10 in den Raum 28, in dem es die dort vorhandene Flüssigkeit zunächst verdrängt - was ein Absinken des Spiegels 30 auf 30' bewirkt - und in der Folge durch die Flüssigkeit im U-förmigen Rohr 27 perlt. Dabei kondensiert der Wasserdampf - dank der Berührung mit der Füllung 32 besonders schnell - und die Luft erreicht den zweiten Behälter 22. Sie steigt in diesem auf und tritt ebenso wie die durch den gestiegenen Spiegel 31' verdrängte Luft durch die Entlüftungsöffnung 34 in die Umgebung aus. Wenn die Flüssigkeit im U-förmigen Rohr 27 und in den unteren Regionen der beiden Behälter 21,22 einen den Gefrierpunkt senkenden Stoff (Glykol oder einen anderen höherwertigen Alkohol) enthält, so absorbiert dieser den Wasserdampf unter Volumenszunahme und mischt sich mit dem Kondensat. Die kondensierende Wirkung dieser Anordnung ist somit eine mehrfache.

Zur Erklärung der Funktion wird weiters der Übergang vom Zustand der Fig. 3 zum Zustand in Fig. 4 beschrieben: Wenn das Getriebe stillgesetzt wird, so kühlt es relativ schnell aus, und mit ihm das im Raum 28 des ersten Behälters 21 befindliche Luft/Dampfgemisch. Dadurch entsteht im Raum 28 ein Unterduck, der ein Anheben des Spiegels 30' im ersten Behälter 21 auf das Niveau 30" und ein entsprechendes Absinken des Spiegels.31' auf das Niveau 31" bewirkt. Weil Luft durch die Entlüftungsöffnung einströmen kann wird das nicht behindert. Allerdings wird die Strömung im Kanal 27 durch dessen Stahlwollefüllung 32 verzögert. Der ansteigende Spiegel 30" im ersten Behälter 21 erreicht schließlich die Öffnung 23, in der die abwärts führende Leitung 10 in den Behälter 21 mündet. Weil das Volumen der Flüssigkeitsfüllung durch Absorption von und Mischung mit Wasser zugenommen hat, strömt die zusätzliche Menge durch die Leitung 10 in das Getriebe 1 zurück. Damit ist sichergestellt, dass sich Menge und Mischungsverhältnis der gesamten Flüssigkeitsmenge nicht ändern.

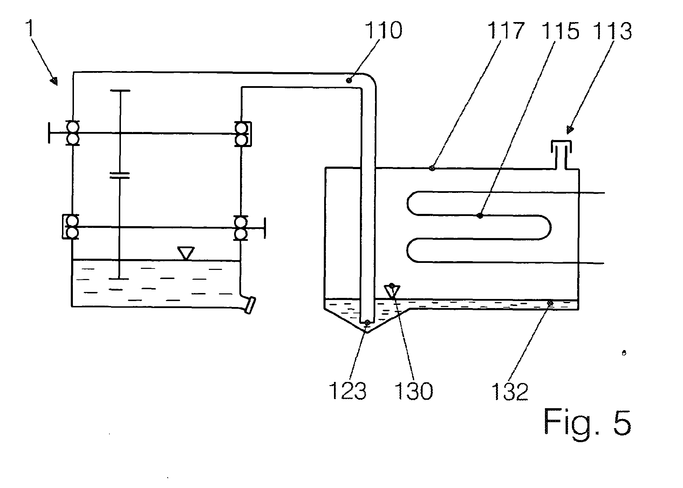

Die erfindungsgemäße Ausführungsform der Fig. 5 unterscheidet sich von der der Fig. 1 dadurch, dass die Leitung 110 in dem Behälter 117 so weit hinunter geführt ist, dass ihr offenes Ende 123 in das kondensierte Wasser 132 eintaucht. Das Ende 123 liegt unter dem Flüssigkeitsspiegel 130, sodass bei Abkühlung des Getriebes Kondensat in das Getriebe zurück gesogen wird. Dadurch herrscht große Freiheit in der Anordnung des Behälters 117. Er kann im Fahrzeug so platziert sein, dass er dem Fahrtwind ausgesetzt ist, auch in Bodennähe.

## Patentansprüche

1. Entlüftungsvorrichtung für Getriebe mit Schmierstoff, welche mit dem Getriebe (1) über eine Leitung (110) verbunden ist, wobei die Entlüftungsvorrichtung (11) mindestens einen Behälter (117) und eine in die Umgebung führende Druckausgleichsöffnung (113) aufweist, die Entlüftungsvorrichtung (11) für Getriebe mit Wasser enthaltendem Schmierstoff ausgelegt ist, der Behälter (117) als Kondensator für durch die Leitung (110) zuströmendes verdampftes Wasser ausgebildet ist und dazu mit Mitteln zur Wärmeabfuhr (115) versehen ist, und das Kondensat von dem Behälter (117) wieder in das Getriebe (1) gelangt,
**dadurch gekennzeichnet, dass** die zum Behälter (117) führende Leitung (110) in den Behälter so tief eintaucht, dass ihre Öffnung (123) unter einem im Behälter (117) herrschenden Flüssigkeitsspiegel (130) ist.

2. Entlüftungsvorrichtung nach Anspruch 1, **dadurch gekennzeichnet, dass** das Mittel zur Wärmeabfuhr eine im Inneren des mindestens einen Behälters (117) angebrachte, von einem geeigneten Kühlmittel durchströmte Rohrgruppe (115) ist.

## Claims

1. Venting apparatus for transmissions with lubricant, which venting apparatus is connected to the transmission (1) via a line (110), the venting apparatus (11) having at least one container (117) and a pressure equalization opening (113) which leads into the surroundings, the venting apparatus (11) being designed for transmissions with lubricant which comprises water, the container (117) being configured as a condenser for evaporated water which flows in through the line (110) and being provided to this end with means for heat discharge (115), and the condensate passing from the container (117) into the transmission (1) again, **characterized in that** the line (110) which leads to the container (117) dips into the container at such a depth that its opening (123) is below a liquid level (130) which prevails in the container (117).

2. Venting apparatus according to Claim 1, **characterized in that** the means for heat discharge is a tube group (115) which is attached in the interior of the at least one container (117) and through which a suitable coolant flows.

## Revendications

1. Dispositif d'aération pour une transmission à lubrifiant, lequel dispositif d'aération est raccordé à la transmission (1) au moyen d'une conduite (110), le dispositif d'aération (11) comprenant au moins un récipient (117) et une ouverture d'équilibrage de la pression (113) menant au milieu ambiant, le dispositif d'aération (11) étant conçu pour une transmission à lubrifiant contenant de l'eau, le récipient (117) étant réalisé sous forme de condenseur pour l'eau évaporée affluant à travers la conduite (110) et étant à cet effet pourvu de moyens de dissipation de la chaleur (115) et le condensat provenant du récipient (117) parvenant à nouveau dans la transmission (1),
**caractérisé en ce que** la conduite (110) menant jusqu'au récipient (117) pénètre si profondément dans le récipient que son ouverture (123) est en dessous d'un niveau de liquide (130) régnant dans le récipient (117).

2. Dispositif d'aération selon la revendication 1, **caractérisé en ce que** le moyen de dissipation de la chaleur est un groupe de tubes (115) monté à l'intérieur de l'au moins un récipient (117) et parcouru par un réfrigérant approprié.
